Europäisches Patentamt

European Patent Office

Office européen des brevets

(11) Publication number : **0 512 793 A2**

# (12) EUROPEAN PATENT APPLICATION

(21) Application number : **92304037.2**

(22) Date of filing : **05.05.92**

(51) Int. Cl.⁵ : **B60Q 1/04**

(30) Priority : **09.05.91 GB 9110024**

(43) Date of publication of application :
**11.11.92 Bulletin 92/46**

(84) Designated Contracting States :
**DE ES FR GB IT**

(71) Applicant : **CARELLO LIGHTING PLC**
**Walkmill Lane, Bridgetown**
**Cannock, Staffordshire WS11 2LP (GB)**

(72) Inventor : **Birt, David Alan**
**19 Langdale Drive**
**Cannock, Staffodshie, WS11 1QW (GB)**
Inventor : **James, Haydn**
**22 Chadsfield Road**
**Rugeley, Staffordshire WS15 2QL (GB)**
Inventor : **Davies, Stephen John**
**4 Boyden Close**
**Penkridge, Staffordshire (GB)**

(74) Representative : **Pearce, Anthony Richmond et al**
**MARKS & CLERK Alpha Tower Suffolk Street**
**Queensway Birmingham B1 1TT (GB)**

(54) **Lamp assembly.**

(57) A lamp assembly for a vehicle has a dished reflector body (18) with a front opening (20) and an internal reflective surface (22) having an optical focus (28) within the body (18) and an optical axis (30) passing through the front opening (20). The reflector body (18) is pivotally supported by an intermediate support member (38) through the intermediary of pivot pins (34, 36) which are vertically aligned on a vertical axis V which passes through the optical axis (30). The intermediate support member (38) is pivotally mounted in a housing (10) through pivot pins (69) which are arranged on a horizontal axis H also passing through the optical axis (30). The housing (10) carries a light transmitting outer cover (12) which is fixed thereto so as to be disposed in front of the front opening (20) of the reflector body (18). The pivots (69 and 34, 36) are disposed as close as possible to the outer cover (12).

FIG 1

EP 0 512 793 A2

Jouve, 18, rue Saint-Denis, 75001 PARIS

This invention relates to a lamp assembly and is more particularly, but not exclusively, concerned with a vehicle headlamp assembly of the type wherein a reflector body is mounted on a fixed support (usually in the form of a housing) for tilting movement about two mutually perpendicular axes to enable the beam of light projected by the lamp assembly to be correctly aimed in use.

In a very well known type of vehicle headlamp assembly, the reflector body is provided on a rearwardly facing surface thereof with three mounting locations which are remote from the optical axis of the reflector. The first mounting location is used to mount the reflector body for limited universal pivotal movement, whilst the other two mounting locations are used to mount the reflector body on the support through the intermediary of adjusting screws and universal pivots whereby rotation of each adjusting screw serves to tilt the reflector body about an axis which passes through the other two mounting locations. The mounting locations are mounted on the rearwardly facing surface of the reflector body in such a way that the adjusting screws can tilt the reflector body independently about two mutually perpendicular axes. The disadvantage of such a mounting arrangement is that tilting movement of the reflector body causes the optical axis of the reflector (the longitudinal axis passing through the focal point of the reflector) to track over a light transmitting outer cover which is fixed relative to the support. As a result of this, the location on the light transmitting outer cover through which reflected light from a particular location on the reflector passes will vary depending upon the tilted position of the reflector body relative to the light transmitting outer cover.

In cases where the light transmitting outer cover has optical refraction means thereon such as prisms and flutes which are used to redirect the lights rays in the desired direction, the beam performance tends to be adversely affected both in terms of appearance and photometric output.

In an effort to overcome this problem, it is known to provide the fixed outer cover merely as a protective cover without any optical refraction means thereon and to provide an intermediate light transmitting element having the desired refraction means thereon, such element being mounted on the reflector body itself so that it moves with tilting movement of the reflector body. The problem with this form of arrangement is that it is expensive to provide since it requires the provision of an additional optically accurate element. Furthermore, the light emanating from the reflector has to pass through two light transmitting elements before emerging from the lamp assembly. This can adversely affect the optical performance of the lamp assembly as well as providing additional surfaces upon which dirt and other contaminants can potentially settle.

It is also known to mount the light transmitting outer cover having the desired optical refraction means thereon on the reflector body so that the outer cover moves with tilting movement of the reflector body. However, this arrangement requires a sufficient gap to be left between the movable outer cover and the surrounding vehicle bodywork to permit adequate movement when the reflector body is tilted, and such a gap potentially leads to undesirable wind noise and ingress of dirt and moisture as well as being unsightly.

It is an object of the present invention to obviate or mitigate the above disadvantages.

According to the present invention, there is provided a lamp assembly comprising a dished reflector body having (a) a front opening, (b) an internal reflective surface with an optical focus within the reflector body, and (c) an optical axis passing through the front opening; means for supporting a light source in the reflector body; a light transmitting outer cover disposed in front of the reflector body so that, in use, light from the light source is reflected by the reflective surface through the front opening and thence through the outer cover, said outer cover having refraction means thereon to refract light passing therethrough; a support relative to which the outer cover is fixedly mounted; and mounting means mounting the reflector body on the support for tilting movement relative to the support and the outer cover independently about vertical and horizontal axes, characterized in that the mounting means is arranged so that the horizontal axis about which the reflector body is tiltable substantially intersects the optical axis of the reflective surface.

By this arrangement, when tilting the reflector body about the horizontal axis, tracking of the optical axis over the refraction means on the front cover is reduced as compared with previously known arrangements where the horizontal axis about which the reflector body is tiltable is spaced a considerable distance from the horizontal plane containing the optical axis of the reflective surface.

It is also preferred for the mounting means to be arranged so that the vertical axis about which the reflector body is tiltable substantially intersects the optical axis of the reflective surface.

Preferably, the mounting means includes a pair of horizontally aligned pivots and a pair of vertically aligned pivots, and the respective pivots of each pair are mutually aligned on opposite sides of the reflector body so that each pivot axis substantially intersects the optical axis of the reflective surface.

In a particularly preferred embodiment, the reflector body is connected with the support via an intermediate support member so that one pair of pivots acts between the intermediate support member and the reflector body and the other pair of pivots acts between the intermediate support member and the first-mentioned support.

It is highly preferred for at least the horizontal pivot axis of the reflector body to be disposed forwardly of the front opening of the reflector body, and as close as possible to the outer cover.

It is generally the case that tilting movement of the reflector body about the horizontal axis will be required more often and to a greater extent than tilting movement about a vertical axis, thus if it is impossible to arrange for both pivot axes to be very close to the outer cover, then it is preferred for the horizontally tilt axis to be disposed closer to the front cover than the vertical tilt axis.

In the embodiment described above wherein the intermediate support member is provided, it is convenient to arrange for the intermediate support member to be pivotally connected with the first-mentioned support via the horizontally aligned pivots and for the reflector body to be connected with the intermediate support member through the vertically aligned pivots.

The internal reflective surface may be of any desired shape eg paraboloidal, ellipsoidal or other shape lying on the surface of a solid of revolution. The dished reflector body may have an internal reflector lying on more than one such reflective surface.

An embodiment of the present invention will now be described, by way of example, with reference to the accompanying drawings, in which:-

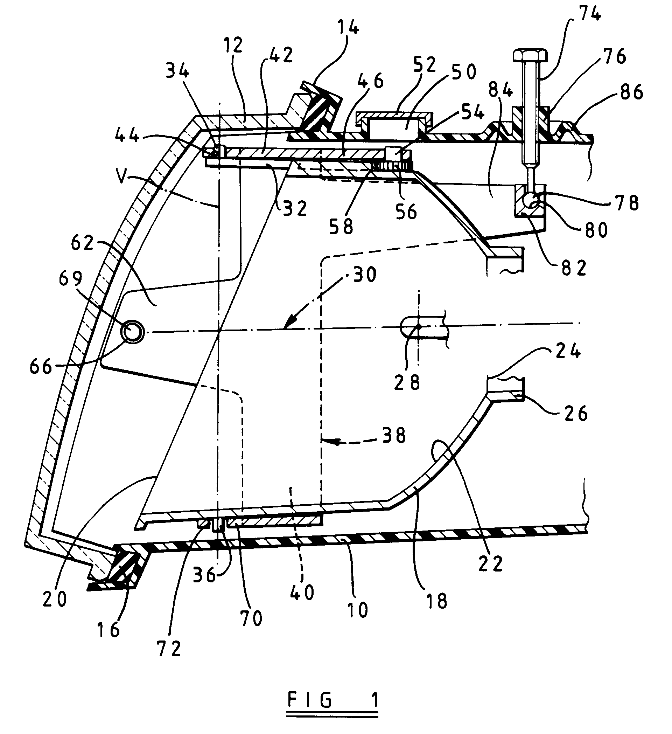

Fig. 1 is an axial section through one embodiment of lamp assembly according to the present invention, and

Fig. 2 is an exploded schematic perspective view of part of the lamp assembly illustrated in Fig. 1.

Referring now to the drawings, the lamp assembly illustrated therein is a motor vehicle headlamp assembly which comprises a support in the form of a synthetic resin housing 10 (only partly shown) which is intended to be fixedly mounted at an appropriate location at the front of the motor vehicle. The housing 10 has a light-transmitting outer cover 12 sealingly fixed to a rim 14 thereof by means of an adhesive/sealant 16. The outer cover 12 is upwardly and rearwardly inclined to reduce wind resistance and to conform in shape to the surrounding bodywork of the motor vehicle to which the lamp assembly is to be fitted. Since the outer cover 12 is fixed relative to the housing 10 which, in turn, is fixed relative to the motor vehicle body, it is possible to provide a very close fit between the outer cover 12 and the surrounding vehicle bodywork.

The lamp assembly further includes a dished reflector body 18 including a front opening 20, a paraboloidal reflective surface 22 and a rear opening 24 surrounded by a sleeve 26 which is adapted to hold a light bulb so that a dipped beam filament thereof is disposed at the focus 28 of the paraboloidal reflective surface 22. The focus 28 is disposed internally of the reflector body 18. The optical axis 30 of the reflective surface 22 is aligned with the longitudinal axis of the reflector body 18 and passes through the front opening 20.

The plane of the front opening 20 lies substantially parallel to the main plane of the outer cover 12.

The reflector body 18 is provided at its top with an integrally formed flange 32 which extends forwardly of the front opening 20 and which supports an upwardly vertically extending pivot pin 34. A downwardly vertically extending pivot pin 36 is integrally formed with a lower surface of the reflector body 18 and is vertically aligned with the pivot pin 34.

The lamp assembly further includes an intermediate support member 38 which takes the form of a rectangular frame 40 surrounding the reflector body 18. The upper part of the frame 40 has an integrally formed, forwardly extending horizontal flange 42 with a vertically extending hole 44 therethrough. The hole 44 pivotally receives the pivot pin 34. The top part of the frame 40 is provided with an integrally formed, rearwardly extending horizontal flange 46 having a hole 48 therethrough. The hole 48 is aligned with an access hole 50 provided in the upper part of the housing 10. The access hole 50 is closed by a removable cover 52. The hole 48 receives a stub axle 54 extending from one side of a gear wheel 56 which is in mesh with a quadrant gear formation 58 formed integrally on the upper surface of reflector body 18. The upper end of stub axle 54 has a recess 60 therein to enable it to be turned by a screwdriver (not shown) inserted through access hole 50 after removal of cover 52.

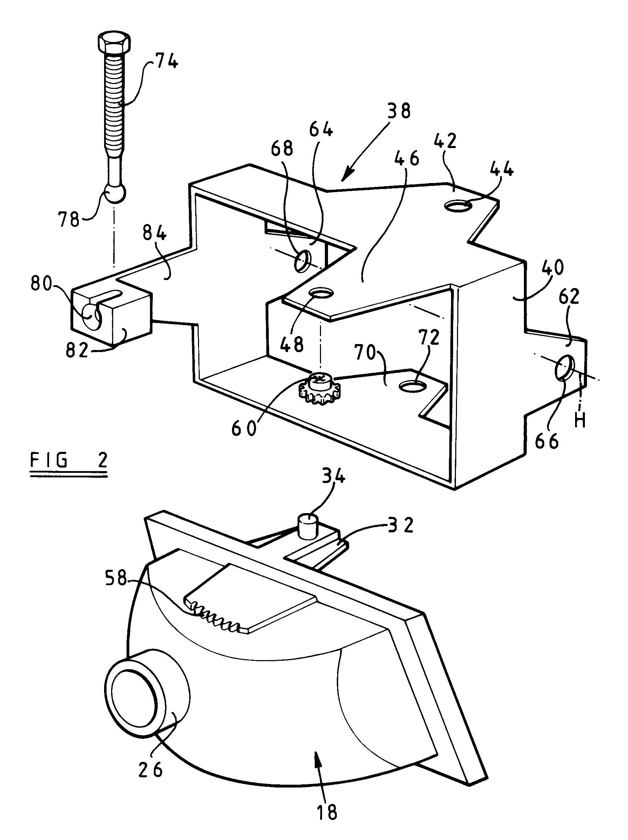

The vertical sides of frame 40 have respective forwardly extending flanges 62 and 64 with aligned holes 66, 68, respectively, therethrough. The axes of the holes 66 and 68 are horizontally disposed and receive respective pivot pins 69 (only one shown) extending inwardly from the forward part of the housing 10. In this manner, the intermediate frame 38 is mounted in the housing 10 for pivotal movement about a horizontal axis H (see Fig. 2) passing through the pins 69 and intersecting the optical axis 30. The bottom part of rectangular frame 40 is provided with an integrally formed, forwardly extending horizontal flange 70 having a hole 72 therethrough which is vertically disposed and aligned with hole 44. The hole 72 receives the pivot pin 36 so that the reflector body 18 can be pivotally moved relative to the intermediate frame 38 about a vertical axis V passing through pivot pins 34 and 36 and intersecting the optical axis 30. Such pivotal movement can be effected by rotation of the gear wheel 56 with a screwdriver as aforesaid. Pivotal movement of the intermediate frame 38, and thereby also pivotal movement of the reflector body 18, about the horizontal axis H passing through pivot pins 69 can be effected by means of an adjusting screw 74 which passes through an internally screw threaded bush 76 formed integrally with the housing 10. The adjusting screw 74 has a part-spherical end 78 which is snap fitted into a part-spherical recess 80 formed in a boss 82 carried by a rearwardly extending flange 84 integrally formed with the frame member 40. A certain degree of tolerance in the positioning of the screw 74 relative to the boss 82 is permitted because the bush 76 is integrally connected with the remainder of the housing 10 through a cupped region 86 which is slightly flexible.

In this embodiment, the adjusting screw 74 is intended to be manually rotatable by means of a spanner or the like engaged with the head of the screw 74. However, it is within the scope of the present invention to provide a drive for rotation of the adjusting screw 74 from a remote location, eg by the driver of the vehicle to compensate for variations in the attitude of the vehicle body as a result of the load carried thereby. Alternatively, adjustment may be effected automatically in this respect to compensate for the effect of different loads on the attitude of the vehicle body relative to the wheels.

## Claims

1. A lamp assembly comprising a dished reflector body (18) having (a) a front opening (20), (b) an internal reflective surface (22) with an optical focus (28) within the reflector body (18), and (c) an optical axis (30) passing through the front opening (20); means (26) for supporting a light source in the reflector body (18); a light transmitting outer cover (12) disposed in front of the reflector body (18) so that, in use, light from the light source is reflected by the reflective surface (22) through the front opening (20) and hence through the outer cover (12), said outer cover (12) having refraction means thereon to refract light passing therethrough; a support (10) relative to which the outer cover (12) is fixedly mounted; and mounting means (32 to 86) mounting the reflector body (18) on the support (10) for tilting movement relative to the support (10) and the outer cover (12) independently about vertical and horizonzal axes (V and H), characterised in that the mounting means (32 to 86) is arranged so that the horizontal axis (H) about which the reflector body (18) is tiltable substantially intersects the optical axis (30) of the reflective surface (22).

2. A lamp assembly as claimed in claim 1, wherein the mounting means (32 to 86) is arranged so that the vertical axis (V) about which the reflector body (18) is tiltable substantially intersects the optical axis (30) of the reflective surface (22).

3. A lamp assembly as claimed in claim 2, wherein the mounting means (32 to 86) includes a pair of horizontally aligned pivots (69) and a pair of vertically aligned pivots (34, 36), and the respective pivots (69 and 34, 36) of each pair are mutually aligned on opposite sides of the reflector body (18) so that each pivot axis (H and V) substantially intersects the optical axis (30) of the reflective surface (22).

4. A lamp assembly as claimed in claim 3, wherein the reflector body (18) is connected with the support (10) via an intermediate support member (38) so that one pair of pivots (69 or 34, 36) acts between the intermediate support member (38) and the reflector body (18) and the other pair of pivots (34, 36 or 69) acts between the intermediate support member (38) and the support (10).

5. A lamp assembly as claimed in claim 1, 2 or 3, wherein at least the horizontal pivot axis (H) of the reflector body (18) is disposed forwardly of the front opening (20) of the reflector body (18).

6. A lamp assembly as claimed in claim 4, wherein the intermediate support member (38) is pivotally connected with the support (10) via the horizontally aligned pivots (69), and the reflector body (18) is connected with the intermediate support member (38) through the vertically aligned pivots (34, 36).

F I G   1

FIG 2